# EUROPÄISCHE PATENTSCHRIFT

(11) **EP 1 768 862 B1**
(45) Veröffentlichungstag und Bekanntmachung des Hinweises auf die Patenterteilung: **19.05.2010**
(21) Anmeldenummer: 05752746.7
(22) Anmeldetag: 24.05.2005
(51) Int. Cl.: B60G 17/015

(54) **VERFAHREN ZUR BELADUNGSABHÄNGIGEN LUFTMENGENREGELUNG IN EINEM LUFTFEDERSYSTEM**
METHOD FOR THE LOAD-DEPENDENT REGULATION OF THE AIR VOLUME IN A PNEUMATIC SPRING SYSTEM
PROCEDE POUR REGULER LA QUANTITE D'AIR DANS UN SYSTEME D'AMORTISSEUR PNEUMATIQUE EN FONCTION DE LA CHARGE

(30) Priorität: 10.07.2004 DE 102004033524
(43) Veröffentlichungstag der Anmeldung: 04.04.2007
(73) Patentinhaber: Continental Aktiengesellschaft, 30165 Hannover (DE)
(72) Erfinder: ILIAS, Heike, 30900 Wedemark (DE); FOLCHERT, Uwe, 31867 Lauenau (DE)
(74) Vertreter: Finger, Karsten
(86) Internationale Anmeldenummer: PCT/EP2005/052358
(87) Internationale Veröffentlichungsnummer: WO 2006/005645

(56) Entgegenhaltungen:
- DE-C1- 10 122 567
- PATENT ABSTRACTS OF JAPAN Bd. 014, Nr. 075 (M-0934), 13. Februar 1990 (1990-02-13) & JP 01 293211 A (FUJI HEAVY IND LTD), 27. November 1989 (1989-11-27)

## Beschreibung

Die Erfindung betrifft ein Verfahren zur Luftmengenregelung in einem geschlossenen Luftfedersystem in einem Fahrzeug gemäß dem Oberbegriff des Patentanspruchs 1.

Es ist allgemein bekannt, dass Luftfedern in Kraftfahrzeugen zur Höhenverstellung der Fahrzeugkarosserie gegenüber dem Fahrweg sowie zur Konstanthaltung eines gewählten Abstandes zum Fahrweg bei unterschiedlicher Fahrzeugbeladung nutzbar sind. Dazu sind solche Luftfedern an zumindest einer Fahrzeugachse zwischen derselben und der Karosserie angeordnet und mit einer Druckluftquelle über Druckluftleitungen verbunden. Die Einstellung der jeweiligen Luftfedern erfolgt auf der Grundlage von geeigneten Sensorinformationen, welche von einem Steuerungs- und Regelungsgerät zu Stellsignalen für in den Druckluftleitungen angeordneten Ventilen verarbeitet werden.

Aus der EP 0 779 167 B1 ist hinsichtlich einer Niveauregeleinrichtung bekannt, dass die Luftmenge in den Luftfederbälgen die Höhe des Fahrzeugsautbaus über der Fahrzeugachse bestimmt, so dass durch eine Veränderung dieser Luftmenge dieser Abstand geändert werden kann. Da Druck, Volumen und Temperatur eines Gases bekanntermaßen aufgrund der Gasgesetzte miteinander verknüpft sind, führt bei konstantem Volumen eines Luftfederbalges eine Veränderung der Luftmenge in dem Balg zu einer Veränderung des dortigen Luftdrucks, welches niveauveränderungswirksam ist. Bei der aus dieser Druckschrift bekannten Niveauregeleinrichtung ist nun unter anderem vorgesehen, dass der in den Luftfederbälgen gemessene Luftdruck bei konstantem Fahrzeugniveau als Maß für die Beladung des Fahrzeuges nutzbar ist, wobei bevorzugt der Mittelwert der Druckmesswerte der Luftfedern einer Fahrzeugachse genutzt wird.

Zum Teil sind derartige Niveauregelungssysteme als geschlossene Systeme aufgebaut, bei denen mittels einer Druckluftpumpe ein Druckluftspeicher mit einem Sollluftdruck beaufschlagbar ist. Bei solchen geschlossenen Druckluflsystemen erfolgt die Versorgung der Luftfedern mit Druckluft dabei üblicherweise aus dem Druckluftvorrat des Druckluftspeichers. Die Druckluftpumpe befüllt den Druckluftspeicher im diskontinuierlichen Betrieb immer dann, wenn die Systemluftmenge unter einen minimalen Grenzwert abfällt.

Insgesamt ist in einem solchen geschlossenen Druckluftsystem immer eine bestimmte Systemluftmenge enthalten, welche im ungestörten Betrieb als konstant anzusehen ist. Änderungen in der Systemluftmenge sind beispielsweise auf Leckstellen im System und/oder auf Temperaturveränderungen zurückzuführen. Wenn die Systemluftmenge unter einen vorbestimmten Sollwert abfällt, so ist dieses in der Regel auch als Druckverlust erkennbar, in dessen Folge die Druckluftpumpe solange aktiviert wird, bis der Sollwert der Systemluftmenge wieder im Druckluftsystem eingeschlossen ist.

Um nun nicht bei jeder kleinen Abweichung von dem Sollwert der Systemluftmenge den beschriebenen Regelvorgang auszulösen, sehen derartige Regelungsverfahren ein Luftmengentoleranzband vor, deren oberer und unterer Grenzwert ebenso wie der Sollwert der Systemluftmenge gemäß dem Stand der Technik für alle Niveauregelungs- und Fahrzeugbeladezustände vorbestimmte konstante Größen sind.

Vor diesem Hintergrund ist aus der DE 101 22 567 C1 ein Verfahren zur Regelung des Drucks des Druckluftspeichers in einer geschlossenen Niveauregelungsanlage bekannt geworden. Die dortige Niveauregelungsanlage verfügt über einen Kompressor und einen Druckluftspeicher, der mit Luft aus der Atmosphäre befüllbar und in die Atmosphäre entleerbar ist. Zudem ist mindestens eine Luftfeder vorhanden, welche über den Kompressor mit dem Druckluftspeicher derart in Verbindung steht, dass Druckluft aus der Luftfeder in den Druckluftspeicher und in umgekehrte Richtung leitbar ist

Gemäß dieser Druckschrift soll in der beschriebenen Niveauregelungsanlage ein Verfahren zur Regelung des Speicherdrucks des Druckluftspeichers zur Anwendung kommen, durch welches sichergestellt ist, dass sich der Speicherdruck in einem bestimmten Bereich befin det und der Druckluftspeicher nicht unnötig mit Druckluft aus der Atmosphäre aufgefüllt bzw. in diese entleert wird

Vorzugsweise soll sich der Speicherdruck in einem bestimmten Zustand des Kraftfahrzeugs in einem bestimmten Bereich befinden, um ein schnelles Anheben und Absenken des Fahrzeugaufbaus zu gewährleisten. In diesem Zusammenhang ist vorgesehen, dass der Speicherdruck des Druckluftspeichers indirekt über die Bestimmung der Luftmenge in der Niveauregelanlage geregelt wird. Dabei wird der Druckluftspeicher mit Luft aus der Atmosphäre aufgefüllt, wenn die Luftmenge unterhalb einer Grenze liegt, und in die Atmosphäre entleert wird, wenn die Luftmenge oberhalb einer oberen Grenze liegt. Diese Regelung wird derart vorgenommen, dass die tatsächliche Luftmenge im System nach dem Auffüllen oder Entleeren in einem Arbeitsbereich zwischen der oberen und der unteren Grenze liegt.

Zudem ist gemäß dieser Druckschrift vorzugsweise vorgesehen, dass die Luftmenge immer in einem bestimmten Arbeitsbereich gehalten wird und infolgedessen der Speicherdruck in dem bestimmten Zustand des Fahrzeuges auch in einem bestimmten Druckbereich liegt. Der Arbeitsbereich für die Luftmenge wird dabei vorzugsweise so gewählt, dass in einem bestimmten Normalzustand des Fahrzeugs der Speicherdruck in einem Bereich liegt, in dem einerseits ein schnelles Anheben und andererseits ein schnelles Absenken des Fahrzeugsaufbaus möglich ist.

Ein solches Regelungsverfahren ist zwar funktionstüchtig, als nachteilig hat sich aber erwiesen, dass insbesondere wegen des konstanten Luftmengen-Sollwertes sowie wegen des festgelegten Luftmengentoleranzbandes für alle Niveau- und Beladungszustände vergleichsweise große Unterschiede in den erforderlichen Regelungszeiten für unterschiedliche Niveau- und Beladezustände feststellbar sind. Darüber hinaus ergibt sich ein Zielkonflikt bei der Regelung der Extremzustände "Abregeln unter Leerlast" und "Aufregeln unter Volllast". Schließlich erfordern derart arbeitende Regelungsverfahren einen vergleichsweise großen Druckluftspeicher, welches sich nachteilig auf die Herstellkosten eines gattungsgemäßen Niveauregelungssystems auswirkt.

Vor diesem Hintergrund liegt der Erfindung die Aufgabe zugrunde, ein Verfahren zur Steuerung- und Regelung eines Niveauregelungssystems vorzuschlagen, mit dem in allen Fahrzeugbeladungszuständen gleichbleibende Regelungsgeschwindigkeiten möglich sind. Zudem soll dieses Verfahren dazu geeignet sein, mit einem möglichst kleinen Druckspeicher auskommen zu können.

Die Lösung dieser Aufgabe ergibt sich aus den Merkmalen des Hauptanspruchs, während vorteilhafte Weiterbildungen und Ausgestaltungsformen des Verfahrens den Unteransprüchen entnehmbar sind.

Der Erfindung liegt die Erkenntnis zu Grunde, dass sich die gestellte Aufgabe lösen lässt, wenn der Systemluftmengen-Sollwert des Niveauregelungssystems in Abhängigkeit von dem Beladungszustand des Fahrzeugs variabel angepasst wird. Eine weitere Verbesserung lässt sich erreichen, wenn auch die Grenzwerte des Luftmengentoleranzbandes beladungsabhängig bestimmt werden.

Demnach geht die Erfindung aus von einem Verfahren zur Luftmengenregelung in einem geschlossenen Luftfedersystem in einem Fahrzeug, bei dem eine Druckluftpumpe mindestens zwei Luftfedern und/oder einen Druckluftspeicher bedarfsgerecht mit einer so großen Luftmenge versorgt, dass in der jeweiligen Luftfeder und/oder in dem Druckluftspeicher ein derart hoher Luftdruck herrscht, dass eine sich an der Luftfeder abstützende Fahrzeugkarosserie einen gewünschten Abstand zum Fahrweg oder zur Fahrzeugachse hat.

Zur Lösung der gestellten Aufgabe ist zusätzlich vorgesehen, dass der Luftfederdruck in wenigstens zwei der Luftfedern einer Fahrzeugachse gemessen wird, dass der Abstand der Fahrzeugkarosserie zum Fahrweg oder zur Fahrzeugachse ermittelt wird, dass aus dem Luftfederdruck und dem Abstand der Fahrzeugkarosserie zum Fahrweg oder zur Fahrzeugachse die Achslast wenigstens einer Fahrzeugachse bestimmt wird, und dass in Abhängigkeit von der jeweiligen Achslast bzw. vom Fahrzeugbeladungszustand ein Systemluftmengen-Sollwert bestimmt wird, auf den die tatsächliche Systemluftmenge durch Betätigen der Druckluftpumpe oder durch Betätigen eines Entlastungsventils eingestellt wird.

Durch diese Vorgehensweise wird der Systemluftmengen-Sollwert beladungsabhängig bestimmt, wodurch sich eine vergleichbare Regelgeschwindigkeit bei unterschiedlichen Beladezuständen des Fahrzeugs ergibt.

Gemäß einer bevorzugten Variante dieses Verfahren ist vorgesehen, dass dem jeweiligen Systemluftmengen-Sollwert ein Luftmengentoleranzband zugeordnet wird, dessen oberer Toleranzbandgrenzwert einen vorbestimmten Systemluftmengen-Maximalwert nicht überschreitet, sowie dessen unterer Toleranzbandgrenzwert einen vorbestimmten Systemluftmengen-Minimalwert nicht unterschreitet. Zudem kann das Toleranzband in Abhängigkeit von dem jeweiligen Beladezustand des Fahrzeugs unterschiedlich breit sein. Dabei wird aber darauf geachtet, dass die maximale und die minimale Luftmenge in dem Druckluftsystem nicht überschritten bzw. unterschritten wird.

Gemäß einer anderen Ausgestaltung der Erfindung kann vorgesehen sein, dass die Differenz zwischen dem Systemluftmengen-Sollwert und dem oberen Toleranzbandgrenzwert sowie die Differenz zwischen dem Systemluftmengen-Sollwert und dem unteren Toleranzbandgrenzwert unterschiedlich groß sind. Durch die Verfahrensregel ist es ermöglicht, dass der Wert für den beladungsgewichtsabhängig einzustellenden Luftmengen-Sollwert sehr dicht an den genannten Maximalwert oder Minimalwert für die Systemluftmenge heranführbar ist.

Vor diesem Hintergrund ist es mit gewissen Einschränkungen auch möglich, wenn der Systemluftmengen-Sollwert mit dem oberen Toleranzbandgrenzwert oder mit dem unteren Toleranzbandgrenzwert zusammenfällt, so dass sich das Toleranzband nur in eine Richtung, nämlich in Richtung höherer oder niedrigerer Systemluftmengenwerte erstreckt. Davon unabhängig wird es jedoch bevorzugt, wenn in beide Richtungen ein Toleranzband vorhanden ist, auch wenn dieses in der einen Richtung nur vergleichsweise klein sein sollte.

Als Sonderfall unter den vorgenannten Randbedingungen kann vorgesehen sein, dass der Systemluftmengen-Sollwert mit dem Systemluflmengen-Maximalwert oder mit dem Systemluftmengen-Minimalwert identisch ist.

Die Erfindung umfasst bevorzugt auch die Verfahrensrandbedienung, gemäß der Systemluftmengen-Maximalwert, der Systemluftmengen-Minimalwert sowie der obere und der untere Toleranzbandgrenzwert derart gewählt sind, dass die Regelgeschwindigkeit bei allen im Betrieb auftretenden Niveauwechselvorgängen oberhalb eines definierten Geschwindigkeitsgrenzwertes liegen.

Gemäß einer anderen Verfahrensrandbedienung ist vorzugsweise vorgesehen, dass der Systemluftmengen-Maximalwert, der Systemluftmengen-Minimalwert sowie der obere und der untere Toleranzbandgrenzwert derart gewählt sind, dass bei allen im Betrieb auftretenden Niveauwechselvorgängen eine maximal zulässige elektrische Stromaufnahme der Druckluftpumpe nicht überschritten wird.

Eine weitere Verfahrensrandbedienung ist **dadurch gekennzeichnet, dass** der Systemluftmengen-Maximalwert, der Systemluflmengen-Minimalwert sowie der obere und der untere Toleranzbandgrenzwert derart gewählt sind, dass bei allen im Betrieb auftretenden Niveauwechselvorgängen ein vorbestimmter minimaler Druck im Luftdruckspeicher nicht unterschritten und ein vorbestimmter maximaler Druck im Luftdruckspeicher nicht überschritten wird.

Bevorzug wird das erfindungsgemäße Verfahren dazu genutzt, um mit demselben die Luftmenge eines Luftfedersystems bzw. Niveauregulierungssystems zu regeln, deren Luftfedern im Bereich der axialen Enden von wenigstens zwei Fahrzeugachsen angeordnet sind. Mit einem solchen sogenannten 4-Corner-Nieveauregelungssystem ist nicht nur die Beibehaltung eines eingestellten Abstandes der Fahrzeugkarosserie zum Fahrweg möglich, darüber hinaus gestattet ein solches System auch eine vom Beladungszustand des Fahrzeugs unabhängige Einstellung des Fahrzeugniveaus.

Es ist aber auch möglich, dieses Verfahren dafür zu nutzen, um mit demselben die Luftmenge eines Luftfedersystems bzw. Niveauregulierungssystems zu regeln, deren verstellbare Luftfedern nur im Bereich der axialen Enden einer Fahrzeughinterachse angeordnet sind.

Gemäß einer letzten Variante der Erfindung ist vorgesehen, dass die Bestimmung des aktuellen Systemluftmengen-Sollwertes sowie der aktuellen Grenzwerte des Luftmengentole ranzbandes während eines Fahrzeugstillstands durchgeführt wird. Dadurch wird einerseits Rechenzeit bei der Auslastung eines diesbezüglichen Steuerungs- und Regelungsgeräts eingespart, andererseits wird der von der Erfindung gewünschte Erfolg nicht geschmälert, da Belade- und Entladevorgänge in der Regel während des Fahrzeugstillstands stattfinden.

Darüber hinaus können Luftfederdruckmessungen während der Fahrt im Sinne von zyklischen Systemluftmengenermittlung durchgeführt werden. Hierdurch kann festgestellt werden, ob sich die Systemluftmenge nach innerhalb des Luftmengentoleranzbandes befindet.

Das erfindungsgemäße Verfahren sowie einige diesbezügliche Ausgestaltungsformen werden nachfolgend anhand der beigefügten Zeichnung weiter erläutert. Darin zeigt
- Fig. 1: ein Diagramm, in dem der Luftfederdruck in Abhängigkeit von der Achslast eines Fahrzeugs aufgetragen ist, und
- Fig. 2: ein Diagramm, in dem die Luftmenge in Abhängigkeit von dem Beladezustand des Fahrzeugs dargestellt ist.

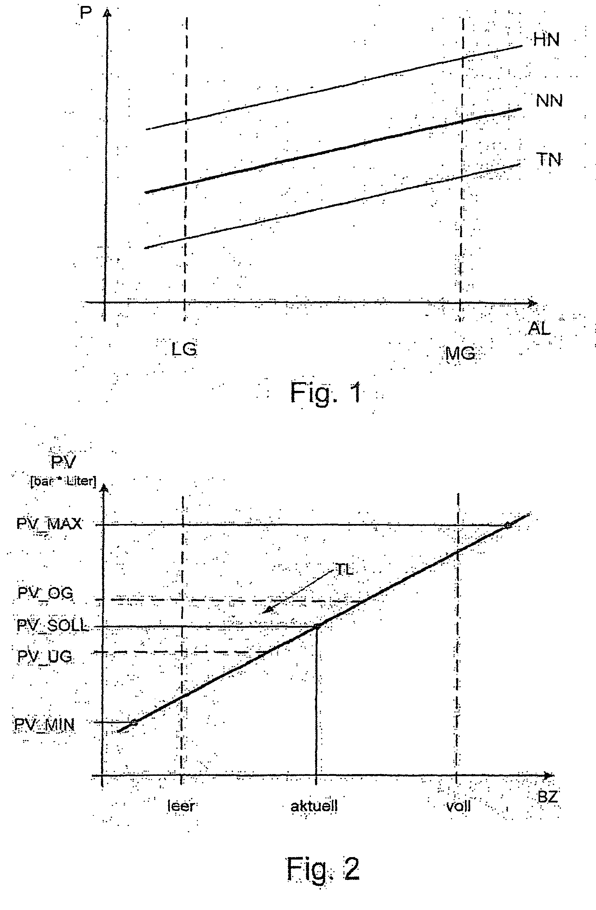

Bei dem in Fig. 1 dargestellten Diagramm ist die Abhängigkeit des Luftfederdrucks P von der Achslast AL einer Fahrzeugachse dargestellt. Bei dem hier beispielhaft betrachteten Fahrzeug handelt es sich um ein Kraftfahrzeug mit einem 4-Corner-Luftfedersystem mit geschlossener Luftversorgung, bei dem neben einem Beladungsausgleich auch eine Niveauverstellung der Fahrzeugkarosserie zu beiden Fahrzeugachsen innerhalb eines bestimmten Verstellbereiches durchgeführt werden kann. Die Grenzen dieses Verstellbereiches sind mit Abstand zu einer das Fahraeugnormalniveau charakterisierenden Geraden NN gewählt und durch die Gerade HN für ein Fahrzeughochniveau sowie die Gerade TN für ein Fahrzeugtiefniveau gebildet

Der Luftdruck P in den Luftfedern dieses Fahrzeugs variiert bei einem gerade eingestellten Fahrzeugniveau (Gerade HN, HH oder TN) in Abhängigkeit von der Achslast AL zwischen einem Wert LG, der das Fahrzeugleergewicht kennzeichnet und einem Wert MG, der das zulässige Gesamtgewicht angibt

Wie Fig. 1 veranschaulicht, ändert sich der Luftdruck P in einer jeden Luftfeder des Fahrzeugs nahezu linear in Abhängigkeit von der Achslast AL bzw. vom Beladungszustand BZ des Fahrzeugs. Mittels einer Messung der Luftfederdrücke an allen vier Luftfedern an den

Enden der beiden Fahrzeugachsen und der Messung des Fahrzeugniveaus HN, NN, TN im Sinne einer Abstandsmessung beispielsweise zwischen der Fahrzeugkarosserie und dem Fahrweg oder der jeweiligen Fahrzeugachse kann somit auf die Achslast AL einer jeden Fahrzeugachse geschlossen werden.

Eine solche Druckmessung ist generell in allen Fahrzeugniveaulagen und auch während der Fahrt möglich. Sie werden zur Bestimmung des Fahrzeugbeladungszustandes bzw. der jeweiligen Achslast AL aber vorzugsweise nur dann durchgeführt, wenn eine Beladung des Fahrzeugs auch tatsächlich stattfindet. Dies ist üblicherweise dann der Fall, wenn das Fahrzeug stillsteht.

Die individuellen beladungsabhängigen Luftfederdrücke P werden auf der Grundlage des in Fig. 1 dargestellten funktionalen Zusammenhangs achsweise zu Achslasten aufsummiert. Dieses Achsgewicht ist äquivalent mit dem Beladezustand BZ des Fahrzeugs. Da sich Beladungsänderungen in erster Linie an den Drücken der Hinterachse bemerkbar machen, reicht es bei einem 4-corner-Luftfedersystem in der Regel aus, nur die Luftfedern der Hinterachse zu beachten. Die Druckwerte der Vorderachse können jedoch zusätzlich zur Plausibilitätskontrolle herangezogen werden.

Aus dem Wert für den aktuellen Beladungszustand BZ lässt sich dann eine Auslegungsluftmenge bzw. ein Luftmengen-Sollwert PV_SOLL bestimmen. Dies geschieht auf der Grundlage einer in einem diesbezüglichen Steuerungs- und Regelungsgerät abgespeicherten Wertetabelle oder einer mathematischen Funktion. Eine solche mathematische Funktion weist gemäß Fig. 2 eine lineare Abhängigkeit auf. Wie diese Abbildung zeigt, ist der Beladezustand des Fahrzeugs hier mit eher qualitativen Werten angegeben, zu denen "leer", aktuell" und "voll" gehören. Anstelle dieser qualitativen Werte kann der Beladezustand BZ aber auch durch das Fahrzeuggesamtgewicht angegeben sein, wobei als niedrigster Wert das Gewicht des unbeladenen, unbesetzten und betankten Fahrzeugs angesetzt werden kann, während der höchste Wert durch das zulässig höchste Fahrzeuggesamtgewicht definierbar ist.

Mit einem derart bestimmten Beladezustand BZ des Fahrzeugs wird sodann ein für denselben aktuell optimaler Luftmengen-Sollwert bestimmt. In dem in Fig. 2 gezeigten Beispiel weist das Fahrzeug einem Beladezustand mit dem Wert "aktuell" auf, dem der beladungsabhängige Luftmengen-Sollwert PV_SOLL zugeordnet ist. Dieser Luftmengen-Sollwert PV_SOLL ist dabei abweichend vom Stand der Technik kein für alle Niveau- und Beladungszustände konstanter Wert. Vielmehr ist dieser abhängig vom Beladezustand BZ des Fahrzeugs und kann auch einen oberen Luftmengengrenzwert PV_MAX oder einen unteren Luftmengengrenzwert PV_MIN aufweisen, die jedoch nicht überschritten werden sollen.

Bevorzugt ist dem Luftmengen-Sollwert PV_SOLL jedoch ein Toleranzband TL mit einem oberen Grenzwert PV_OG und einem unteren Grenzwert PV_UG zugeordnet, die beispielsweise den gleichen Abstand vom Luftmengen-Sollwert PV_SOLL aufweisen. Die Differenz zwischen den beiden Grenzwerten PV-OG und PV_UG wird vorzugsweise in Abhängigkeit von dem verfahrensgemäß bestimmten Beladungszustand des Fahrzeugs bestimmt. Dabei ist für beide Grenzwerte PV_OG und PV_UG ein gleicher Abstand zum Luftmengen-Sollwert PV_SOLL nicht zwanghaft vorgeschrieben.

So kann in den bereits beschriebenen Fällen, in denen der Luftmengen-Sollwert PV_SOLL den oberen Luftmengengrenzwert PV_MAX aufweist, die obere Hälfte des Toleranzbandes TL auf Null zusammengeschrumpft sein, während die untere Hälfte desselben noch bestehen blieb. Sofern der Luftmengensollwert PV_SOLL identisch mit dem unteren Luftmengengrenzwert PV_MIN ist, so weist demgemäss der untere Toleranzgrenzweft PV_UG den Wert Null auf.

Wie bereits eingangs erwähnt, sollte für eine optimale Funktionsweise des Luftfedersystems jedoch stets ein Toleranzband in beiden Richtungen vom Luftmengensollwert PV_SOLL vorhanden sein, damit auch kleine Temperaturschwankungen oder Toleranzen im Druckluftsystem nicht sofort zum Luftmengenausgleich führen.

Wie Fig. 2 verdeutlicht, kann die Differenz zwischen dem Luftmengen-Sollwert PV_SOLL und dem oberer Grenzwert PV_OG bzw. dem unteren Grenzwert PV_UG des Toleranzbandes TL vorzugsweise auch so bestimmt sein, dass dann, wenn der Beladezustand BZ des Fahrzeugs den Wert "voll" oder "leer" erreicht, der oberer Grenzwert PV_OG bzw. der untere Grenzwert PV_UG des Toleranzbandes TL dem oberen Luftmengengrenzwert PV_MAX bzw. dem unteren Luftmengengrenzwert PV_MIN entspricht.

Der so bestimmte beladungsabhängige Luftmengensollwert PV_SOLL sowie vorzugsweise auch die Grenzwerte des Toleranzbandes TL werden von einem Steuerungs- und Regelungsgerät beispielsweise zyklisch und/oder immer dann neu bestimmt, wenn sich das Fahrzeug im Stillstand befindet. Sollte dabei die tatsächliche Systemluftmenge außerhalb des Toleranzbandes TL für den dann aktuellen Beladungszustand BZ liegen, so ist dies auf größere Temperaturänderungen und/oder eine Leckage zurückzuführen. In diesem Fall wird dem Druckluftsystem mittels der Druckluftpumpe soviel Druckluft zugeführt oder durch Betätigung eines Druckentlastungsventils entnommen, bis der beladungsabhängige Luftmengen-Sollwert PV_SOLL erreicht ist.

Das erfindungsgemäße Verfahren ist aber auch für Niveauregelungseinrichtungen mit geschlossener Luftversorgung nutzbar, bei denen lediglich eine Regelungsfunktion zur Beibehaltung eines einmal eingestellten Fahrzeugniveaus im Sinne eines Normal- oder Fahmiveaus realisiert ist.

Auch bei dieser Anwendung zeichnet sich das erfindungsgemäße Verfahren dadurch aus, dass für alle Beladungszustände des Fahrzeugs eine zumindest angenähert gleiche Regelungsgeschwindigkeit erzielbar ist. Zudem ermöglich die vorgeschlagene Verfahrensweise gegenüber Regelungsverfahren mit fest definierten Luftmengen-Sollwerten sowie Luftmengen-Toleranzbändern einen kleineren Druckluftspeicher, welches zu Kostenvorteilen beim Herstellen eines solchen Niveauregelungssystems führt.

### Bezugszeichenliste

- AL: Achslast
- BZ: Beladezustand des Fahrzeugs
- HN: Hochniveau, Abstand der Karosserie vom Fahrweg
- LG: Leergewicht
- MG: Maximalgewicht
- NN: Normalniveau, Abstand der Karosserie vom Fahrweg
- TN: Tiefniveau, Abstand der Karosserie vom Fahrweg
- P: Luftfederdruck
- PV: Systemluftmenge
- PV_MIN: Systemluftmengen-Minimalwert
- PV_SOLL: Systemluftmengen-Sollwert
- PV_MAX: Systemluftmengen-Maximalwert
- PV_UG: Oberer Grenzwert des Toleranzbandes
- PV_OG: Unterer Grenzwert des Toleranzbandes
- TL: Luftmengentoleranzband

## Patentansprüche

1. Verfahren zur Luftmengenregelung in einem geschlossenen Luftfedersystem in einem Fahrzeug, bei dem eine Druckluflpumpe mindestens zwei Luftfedern und/oder einen Druckluftspeicher bedarfsgerecht mit einer so großen Luftmenge versorgt, dass in der jeweiligen Luftfeder und/oder in dem Druckluftspeicher ein derart hoher Luftdruck herrscht, dass eine sich an der Luftfeder abstützende Fahrzeugkarosserie einen gewünschten Abstand zum Fahrweg oder zur Fahrzeugachse hat, wobei
der Luftfederdruck (P) in wenigstens zwei der Luftfedern gemessen wird und der Abstand (HN, NN, TN) der Fahrzeugkarosserie zum Fahrweg oder zur Fahrzeugachse ermittelt wird, **dadurch gekennzeichnet,**
**dass** aus dem Luftfederdruck (P) und dem Abstand (HN, NN, TN) der Fahrzeugkarosserie zum Fahrweg oder zur Fahrzeugachse die Achslast (AL) der jeweiligen Fahrzeugachse bestimmt wird,
und **dass** in Abhängigkeit von der Achslast (AL) wenigstens einer Fahrzeugachse ein Systemluflmengen-Sollwen (PV_SOLL) bestimmt wird, auf den die tatsächliche Systemluftmenge durch Betätigen der Druckluftpumpe oder durch Betätigen eines Entlastungsventils eingestellt wird.

2. Verfahren nach Anspruch 1, **dadurch gekennzeichnet, dass** dem jeweiligen System-luftmengen-Sollwert (PV_SOLL) ein Luftmengentoleranzband (TL) zugeordnet wird, dessen oberer Toleranzbandgrenzwert (PV_OG) einen vorbestimmten Systemluftmengen-Maximalwert (PV_MAX) nicht überschreitet, sowie dessen unterer Toleranzbandgrenzwert (PV_UG) einen vorbestimmten Systemluftmengen-Mminudwert (PV_MIN) nicht unter-schreitet.

3. Verfahren nach Anspruch 2, **dadurch gekennzeichnet, dass** die Differenz zwischen dem Systemluftmengen-Sollwert (PV_SOLL) und dem oberen Toleranzbandgrenz wert (PV_OG) sowie die Differenz zwischen dem Systemluftmengen-Sollwert (PV_SOLL) und dem unteren Toleranzbandgrenzwert (PV_UG) unterschiedlich groß sein kann.

4. Verfahren nach Anspruch 2, **dadurch gekennzeichnet, dass** der Systemluftmengen-Sollwert (PV_SOLL) mit dem oberen Toleranzbandgrenzwert (PV_OG) oder mit dem unteren Toleranzbaadgrenzwert (PV_UG) zusammenfällt.

5. Verfahren nach Anspruch 2, **dadurch gekennzeichnet, dass** der Systemluftmengen-Sollwert (PV_SOLL) dem Systemluftmengen-Maximalwert (PV_MAX) oder dem Systemluftmengen-Minimalwert (PV_MIN) entspricht.

6. Verfahren nach wenigstens einem der Ansprüche 2 bis 5, **dadurch gekennzeichnet, dass** der Systemluftmengen-Maximalwert (PV_MAX), der Systemluftmengen-Minimalwert (PV_MIN) sowie der obere und der untere Toleranzbandgrenzwert (PV_OG, PV_UG) derart gewählt sind, dass die Regelgeschwindigkeit bei allen im Betrieb auftretenden Niveauwechselvorgängen oberhalb eines definierten Geschwindigkeitsgrenzwertes liegen.

7. Verfahren nach wenigstens einem der Ansprüche2 bis 6, **dadurch gekennzeichnet, dass** der Systemluftmengen-Maximalwert (PV_MAX), der Systemluftmengen-Minimalwert (PV_MIN) sowie der obere und der untere Toleranzbandgrenzwert (PV_OG, PV_UG) derart gewählt sind, dass bei allen im Betrieb auftretenden Niveauwechselvorgängen ein maximal zulässiger elektrischer Strom der Druckluftpumpe nicht überschritten wird.

8. Verfahren nach wenigstens einem der Ansprüche 2 bis 7, **dadurch gekennzeichnet, dass** der Systemluftmengen-Maximalwert (PV_MAX), der Systemlufüneugen-Minimalwert (PV_MIN) sowie der obere und der untere Toleranzbandgrenzwert (PV_OG, PV_UG) derart gewählt sind, dass bei allen im Betrieb auftretenden Niveauwechselvorängen ein vorbestimmter minimaler Druck im Luftdruckspeicher nicht unterschritten und ein vorbestimmter maximaler Druck im Luftdruckspeicher nicht überschritten wird.

9. Verfahren nach wenigstens einem der vorherigen Ansprüche, **dadurch gekennzeichnet, dass** mit demselben die Luftmenge für die Luftfedern eines Luftfedersystems und/oder Niveauregulierungssystems geregelt wird, deren Luftfedern im Bereich der axialen Enden von wenigstens zwei Fahrzeugachsen angeordnet sind.

10. Verfahren nach wenigstens einem der vorherigen Ansprüche, **dadurch gekennzeichnet, dass** mit demselben die Luftmenge für die Luftfedern eines Luftfedersystems und/oder Niveauregulierungssystems geregelt wird, deren Luftfedern im Bereich der axialen Enden einer Fahrzeughinterachse angeordnet sind.

11. Verfahren nach wenigstens einem der Ansprüche 2 bis 8, **dadurch gekennzeichnet, dass** die Bestimmung des Systemluftmengen-Sollwerts (PV_SOLL) sowie der Grenzwerte (PV_OG, PV_UG) des Luftmengentoleranzbandes (TL) während eines Fahrzeugstillstands durchgeführt wird.

## Claims

1. Method for air quantity regulation in a closed pneumatic spring system in a vehicle, in which method a compressed air pump supplies at least two pneumatic springs and/or a compressed air store on demand with an air quantity of such a magnitude that a high air pressure prevails in the respective pneumatic spring and/or in the compressed air store such that a vehicle body which is supported on the pneumatic spring is at a desired distance from the underlying surface or from the vehicle axle,
the pneumatic spring pressure (P) being measured in at least two of the pneumatic springs, and
the distance (HN, NN, TN) from the vehicle body to the underlying surface or to the vehicle axle being determined, **characterized in that**
the axle load (AL) of the respective vehicle axle is determined from the pneumatic spring pressure (P) and
the distance (HN, NN, TN) from the vehicle body to the underlying surface or to the vehicle axle,
and **in that** a nominal system air quantity value (PV_SOLL) is determined as a function of the axle load (AL), the actual system air quantity being adjusted to said nominal system air quantity value (PV_SOLL) by actuating the compressed air pump or by actuating a relief valve.

2. Method according to Claim 1, **characterized in that** the respective nominal system air quantity value (PV_SOLL) is assigned an air quantity tolerance band (TL) whose upper tolerance band limit value (PV_OG) does not exceed a predetermined maximum system air quantity value (PV_MAX), and whose lower tolerance band limit value (PV_UG) does not fall below a predetermined minimum system air quantity value (PV_MIN).

3. Method according to Claim 2, **characterized in that** the difference between the nominal system air quantity value (PV_SOLL) and the upper tolerance band limit value (PV_OG) and the difference between the nominal system air quantity value (PV_SOLL) and the lower tolerance band limit value (PV_UG) can be of different magnitude.

4. Method according to Claim 2, **characterized in that** the nominal system air quantity value (PV_SOLL) coincides with the upper tolerance band limit value (PV_OG) or with the lower tolerance band limit value (PV_UG).

5. Method according to Claim 2, **characterized in that** the nominal system air quantity value (PV_SOLL) corresponds to the maximum system air quantity value (PV_MAX) or the minimum system air quantity value (PV_MIN).

6. Method according to at least one of Claims 2 to 5, **characterized in that** the maximum system air quantity value (PV_MAX), the minimum system air quantity value (PV_MIN) and the upper and lower tolerance band limit values (PV_OG, PV_UG) are selected such that the regulating speed is higher than a defined speed limit value in all level change processes which occur during operation.

7. Method according to at least one of Claims 2 to 6, **characterized in that** the maximum system air quantity value (PV_MAX), the minimum system air quantity value (PV_MIN) and the upper and lower tolerance band limit values (PV_OG, PV_UG) are selected such that a maximum permitted electrical current of the compressed air pump is not exceeded in all level change processes which occur during operation.

8. Method according to at least one of Claims 2 to 7, **characterized in that** the maximum system air quantity value (PV_MAX), the minimum system air quantity value (PV_MIN) and the upper and lower tolerance band limit values (PV_OG, PV_UG) are selected such that the pressure in the compressed air store does not fall below a predetermined minimum value and the pressure in the compressed air store does not exceed a maximum predetermined value in all level change processes which occur during operation.

9. Method according to at least one of the preceding claims, **characterized in that** it is used to regulate the air quantity for the pneumatic springs of a pneumatic spring system and/or level regulating system whose pneumatic springs are arranged in the region of the axial ends of at least two vehicle axles.

10. Method according to at least one of the preceding claims, **characterized in that** it is used to regulate the air quantity for the pneumatic springs of a pneumatic spring system and/or level regulating system whose pneumatic springs are arranged in the region of the axial ends of a rear vehicle axle.

11. Method according to at least one of Claims 2 to 8, **characterized in that** the nominal system air quantity value (PV_SOLL) and the limit values (PV_OG, PV_UG) of the air quantity tolerance band (TL) are determined while the vehicle is at rest.

## Revendications

1. Procédé de régulation de la quantité d'air présente dans un système fermé d'amortissement pneumatique d'un véhicule, dans lequel
une pompe de compression d'air délivre en fonction des besoins à au moins deux amortisseurs pneumatiques et/ou une réserve d'air comprimé une quantité d'air suffisamment élevée pour qu'il règne dans chaque amortisseur pneumatique et/ou dans la réserve d'air comprimé une pression d'air suffisamment élevée pour que le châssis du véhicule qui est soutenu par les amortisseurs pneumatiques présente une distance souhaitée par rapport à la chaussée ou aux essieux du véhicule,
la pression (P) dans les amortisseurs pneumatiques étant mesurée sur au moins deux des amortisseurs pneumatiques,
la distance (HN, NN, TN) entre le châssis du véhicule et la chaussée ou les essieux du véhicule étant déterminée,
**caractérisé en ce que**
la charge (AL) appliquée sur chaque essieu du véhicule est déterminée à partir de la pression (P) qui règne dans les amortisseurs pneumatiques et de la distance (HN, NN, TN) entre le châssis du véhicule et la chaussée ou les essieux du véhicule et
**en ce qu'**une valeur de consigne (PV_SOLL) de la quantité d'air présente dans le système est déterminée en fonction de la charge (AL) appliquée sur au moins un essieu du véhicule en ajustant la quantité d'air effectivement présente dans le système par actionnement de la pompe de compression d'air ou par actionnement d'une soupape de délestage.

2. Procédé selon la revendication 1, **caractérisé en ce qu'**une bande de tolérance (TL) de la quantité d'air dont la valeur de la limite supérieure (PV_OG) ne dépasse pas une valeur maximale (PV_MAX) prédéterminée de la quantité d'air présente dans le système et dont la valeur limite inférieure (PV_UG) ne descend pas en dessous d'une valeur minimale prédéterminée (PV_MIN) de la quantité d'air présente dans le système est associée à chaque valeur de consigne (PV_SOLL) de la quantité d'air présente dans le système.

3. Procédé selon la revendication 2, **caractérisé en ce que** la différence entre la valeur de consigne (PV_SOLL) de la quantité d'air présente dans le système et la valeur limite supérieure (PV_OG) de la bande de tolérance et la différence entre la valeur de consigne (PV_SOLL) de la quantité d'air présente dans le système et la valeur limite inférieure (PV_UG) de bande de tolérance peuvent être différentes.

4. Procédé selon la revendication 2, **caractérisé en ce que** la valeur de consigne (PV_SOLL) de la quantité d'air présente dans le système coïncide avec la valeur limite supérieure (PV_OG) de la bande de tolérance ou avec la valeur limite inférieure (PV_UG) de la bande de tolérance.

5. Procédé selon la revendication 2, **caractérisé en ce que** la valeur de consigne (PV_SOLL) de la quantité d'air présente dans le système correspond à la valeur maximale (PV_MAX) de la quantité d'air présente dans le système ou à la valeur minimale (PV_MIN) de la quantité d'air présente dans le système.

6. Procédé selon au moins l'une des revendications 2 à 5, **caractérisé en ce que** la valeur maximale (PV_MAX) de la quantité d'air présente dans le système, la valeur minimale (PV_MIN) de la quantité d'air présente dans le système ainsi que la valeur limite supérieure et la valeur limite inférieure (PV_OG, PV_UG) de la bande de tolérance sont sélectionnées de telle sorte que la vitesse de régulation soit située au-dessus d'une valeur limite définie de vitesse dans toutes les opérations de modification de niveau qui surviennent en utilisation.

7. Procédé selon au moins l'une des revendications 2 à 6, **caractérisé en ce que** la valeur maximale (PV_MAX) de la quantité d'air présente dans le système, la valeur minimale (PV_MIN) de la quantité d'air présente dans le système ainsi que la valeur limite supérieure et la valeur limite inférieure (PV_OG, PV_UG) de la bande de tolérance sont sélectionnées de telle sorte qu'un courant électrique maximal admissible de la pompe de compression d'air ne soit pas dépassé dans toutes les opérations de modification de niveau qui surviennent en utilisation.

8. Procédé selon au moins une des revendications 2 à 7, **caractérisé en ce que** la valeur maximale (PV_MAX) de la quantité d'air présente dans le système, la valeur minimale (PV_MIN) de la quantité d'air présente dans le système ainsi que la valeur limite supérieure et la valeur limite inférieure (PV_OG, PV_UG) de la bande de tolérance sont sélectionnées de telle sorte que la pression qui règne dans la réserve d'air comprimé ne descende pas en dessous d'une pression minimale prédéterminée dans toutes les opérations de modification de niveau qui surviennent en utilisation et qu'elle ne dépasse pas une pression maximale prédéterminée dans la réserve d'air comprimé.

9. Procédé selon au moins l'une des revendications précédentes, **caractérisé en ce qu'**il régule la quantité d'air destinée aux amortisseurs pneumatiques d'un système d'amortissement pneumatique et/ou d'un système de régulation de niveau dont les amortisseurs pneumatiques sont disposés dans la zone occupée par les extrémités axiales d'au moins deux essieux du véhicule.

10. Procédé selon au moins l'une des revendications précédentes, **caractérisé en ce qu'**il régule la quantité d'air destinée aux amortisseurs pneumatiques d'un système d'amortissement pneumatique et/ou d'un système de régulation de niveau dont les amortisseurs pneumatiques sont disposés dans la zone occupée par les extrémités axiales de l'essieu arrière du véhicule.

11. Procédé selon au moins l'une des revendications 2 à 8, **caractérisé en ce que** la détermination de la valeur de consigne (PV_SOLL) de la quantité d'air présente dans le système ainsi que des valeurs limites (PV_OG, PV_UG) de la plage de tolérance (TL) de la quantité d'air est exécutée pendant un arrêt du véhicule.
